# EUROPEAN PATENT SPECIFICATION

(11) **EP 1 596 559 B1**
(45) Date of publication and mention of the grant of the patent: **10.07.2013**
(21) Application number: 05252812.2
(22) Date of filing: 07.05.2005
(51) Int. Cl.: H04L 29/06, H04N 7/173

(54) **Method for sharing audio/video content over network, and structures of sink device, source device and message**
Verfahren zur gemeinsamen Benutzung von Audiovideoinhalt in einem Netz und Strukturen der Senkevorrichtung, der Quellevorrichtung und der Meldung
Procédé pour le partage en réseau de contenu audiovisuel, et structures de dispositif puit, de dispositif source et de message

(30) Priority: 12.05.2004 KR 2004033382
(43) Date of publication of application: 16.11.2005
(73) Proprietor: Samsung Electronics Co., Ltd., Suwon-si, Gyeonggi-do, 443-742 (KR)
(72) Inventor: An, Cheol-hong, Suwon-si, Gyeonggi-do (KR)
(74) Representative: Robinson, Ian Michael

(56) References cited:
- US-A1- 2003 185 156
- LEA R ET AL: "NETWORKING HOME ENTERTAINMENT DEVICES WITH HAVI" COMPUTER, IEEE SERVICE CENTER, LOS ALAMITOS, CA, US, vol. 33, no. 9, 1 September 2000 (2000-09-01), pages 35-43, XP000987591 ISSN: 0018-9162

## Description

The present invention relates to a method for sharing audio/video (A/V) content over a network, and structures of a sink device, a source device, and a message.

US-A-2003/0185156 mentions a transmission method of the related art wherein a data stream is simultaneously provided from a source device to a first sink device and to a second sink device. The appended claims have been characterised based on this document.

An increasing number of digital products are being produced due to the development and spread of digital technology. For example, digital versatile discs (DVD), cable set-top boxes (STB), DVD/video cassette recorders (DVCR), digital televisions (DTV), and personal computers (PC) are all connected to a single network. A home network standard to control these interconnected devices is defined by the digital home working group (DHWG).

Recently, the environment for multimedia within the home network may be categorized into three worlds: a PC Internet world, a mobile world, and a consumer electronics (CE) broadcast world.

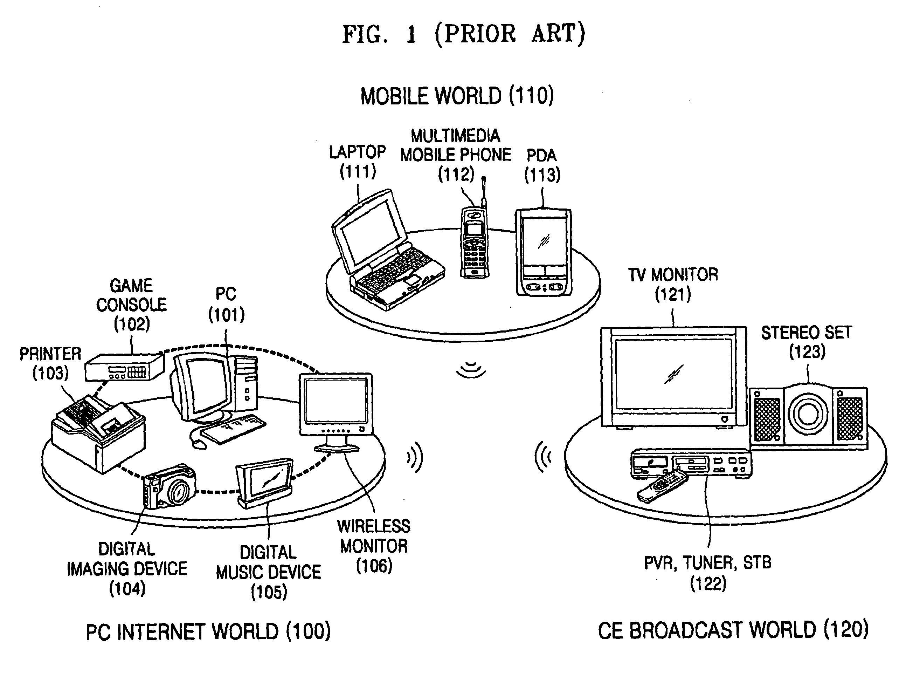

Figure 1 is a view to explain the conventional home network environment according to the DHWG. A PC Internet world 100 includes a PC and PC peripheral telecommunication devices. In more detail, it includes, for example, a PC 101, a game console 102, a printer 103, a digital imaging device 104, a digital music device 105, and a wireless monitor 106.

A mobile world 110 includes, for example, a laptop 111, a multimedia mobile phone 112, and a personal digital assistant (PDA) 113. Such mobile devices provide users with the freedom to move around both inside and outside the home, while connected to the network.

A CE broadcast world 120 includes a TV monitor 121, conventional consumer electronics such as a personal video recorder (PVR), a tuner, a STB 122, and a stereo set 123.

Consumers may want to link and operate the devices in the three domains together within the household. However, research on home networks is required to connect the three worlds together and provide interoperability.

A digital home is configured in a network of CE, mobile, and PC devices. Such network worlds need to cooperate with each other for transparency, simplicity, and continual interoperability. In addition, such a network is based on Internet Protocol (IP) networking and universal plug and play (UPnP) technologies.

Media management and control using UPnP audio/video technology makes it possible for devices and applications to distinguish, manage, and distribute media content in the home network. Also, the media content can be transmitted to a mobile device.

UPnP is an architecture for peer-to-peer network connection of, for example, intelligent applications, wireless devices, and PCs. It is versatile and easy to use in a small-size network, for example, home or small business, and is designed to provide a connection based on the standard. The UPnP architecture defines general interaction between an UPnP control point and UPnP devices. The UPnP architecture allows the devices to support content and transmission protocols in any form. UPnP devices include a TV, VCR, compact disc (CD)/DVD player, STB, stereo system, Motion Picture Experts Group (MPEG) audio layer 3 (MP3) player, still camera, camcorder, PC, and so on. An A/V architecture allows devices to support content of different formats (e.g., MPEG2, MPEG4, Joint Photographic Experts Group (JPEG), MP3, bitmap (BMP), and Window media architecture (WMA)) and transmission protocols of various types (e.g. Institute of Electrical and Electronics Engineers (IEEE)-1394, Hyper Text Transfer Protocol (HTTP) GET, Real-Time Transport Protocol (RTP), HTTP PUT/POST, and Transmission Control Protocol (TCP)/IP).

The majority of UPnP A/V scenarios include transmitting content (e.g., movies, music, and pictures) from one device to another device. An A/V control point interacts with at least two UPnP devices that act as a source and a sink.

A media server has content a user wants to transmit to another device. The media server may include or access a plurality of types of content. The media server accesses the content and transmits them to another device via a network, using a predetermined transmission protocols. Examples of the media server include, a VCR, CD/DVD player, camera, camcorder, PC, STB, satellite receiver, audio tape player, and so on.

A media server control point controls and manages an operation of the media server set by a user to perform the operation (e.g., reproduction) the user wants to perform. Also, the media server control point provides a user interface so that the user can interact with the devices to control the devices. Examples of the media server control point include, a TV having a general remote control, and a wireless PDA device. In addition, when required by the user, the media server control point may control the flow of content by invoking various A/V transmission actions such as stop, pause, fast forward, rewind, and skip.

In the home network environment illustrated in FIGURE 1, the user may wish to share certain content with more than two devices via the network. For example, the user watching a video on a TV in the living room may want to watch the same video through a PC in another room. Therefore, a method of sharing A/V content with a plurality of devices via the network is required.

According to the present invention there is provided an apparatus and method as set forth in the appended claims. Preferred features of the invention will be apparent from the dependent claims, and the description which follows.

The present invention provides a method of sharing A/V content, a sink device, a source device, and the structure of a message, all of which allow sharing of the A/V content via a network.

According to an aspect of the present invention, there is provided a method of sharing A/V content through a network. The method includes: receiving information regarding the sharing state of the A/V content from a source device which provides the A/V content; transmitting a request for the shared A/V content, to the source device; and receiving the shared A/V content from the source device in response to the request.

The request for the shared A/V content is generated by a sink device that desires to share the A/V content.

The transmitting of the request may include transmitting a request which designates a sharing mode which indicates the sharing type of the A/V content.

The sharing mode includes a new mode that requests the A/V content to be transmitted independently, regardless of the A/V content being transmitted to another sink device, a superimposition mode that requests the shared A/V content being transmitted to another sink device to be transmitted in superimposition, and a redirection mode that requests the shared A/V content being transmitted to another sink device to be transmitted in succession and stops the transmission to the another sink device.

According to another aspect of the present invention, there is provided a method of sharing A/V content through a network. The method includes: receiving a request from a second sink device to transmit the A/V content being transmitted to a first sink device thereto; and transmitting the A/V content being transmitted to the first sink device to the second sink device in response to the request.

The receiving of the request may include transmitting a request which designates a sharing mode which indicates the sharing type of the A/V content with the first sink device.

The sharing mode includes a new mode that requests the A/V content to be transmitted independently, regardless of the A/V content being transmitted to the first sink device, a superimposition mode that requests the shared A/V content being transmitted to the first sink device to be transmitted in superimposition, and a redirection mode that requests the shared A/V content being transmitted to the first sink device to be transmitted in succession and stops the transmission to the first sink device.

According to another aspect of the present invention, there is provided a sink device for sharing A/V content in a network. The sink device includes: a first processor to request information on the A/V content to a source device, which provides the A/V content, and receive information on another sink device that is sharing the A/V content in response to the request; and a second processor to generate and transmit a request message to transmit the share A/V content to the source device, and receive the shared A/V content from the source device in response to the request.

The second processor may designate a sharing mode which indicates the sharing type of the A/V content with the another sink device, in the request message.

The first processor may be configured as a media server control point, and the second processor may be configured as a streaming client.

According to another aspect of the present invention, there is provided a source device for sharing A/V content in a network. The source device includes: a first processor to transmit information on the sharing state of the A/V content to a second sink device in response to a request of the second device which requests the transmittance of the information on the A/V content being transmitted to a first sink device; and a second processor to transmit the A/V content being transmitted to the first sink device to the second sink device in response to the request of the second sink device.

The second processor may receive a request which designates a sharing mode which indicates the sharing type of the A/V content with the first sink device.

The first processor is configured as a media server control point, and the second processor is configured as a streaming client.

According to another aspect of the present invention, there is provided a structure of a response message of a sink device for responding to an A/V content information request transmitted to a source device from a sink device, to share the A/V content via a network. The structure of the response message includes: a type field of the requested A/V content; and a sharing device identifier field indicating the sharing device which shares the A/V content with the source device.

The response message may use a hyper text transfer protocol (HTTP) response message.

According to another aspect of the present invention, there is provided a structure of a response message for an A/V content information request transmitted to a source device from a sink device, to share the A/V content via a network. The structure of the response message includes: an information field for identifying A/V content that desires to be shared; a sharing mode field that shows the sharing type of the A/V content with another sink device; and a device identifying field to identify a sink device transmitting the request message.

The response message may use an HTTP response message.

The sharing mode includes a new mode that requests the A/V content to be transmitted independently, regardless of the A/V content being transmitted to the another sink device, a superimposition mode that requests the shared A/V content being transmitted to the another sink device to be transmitted in superimposition, and a redirection mode that requests the shared A/V content being transmitted to the another sink device to be transmitted in succession and stops the transmission to the another sink device.

The above and other aspects of the present invention will become more apparent by describing in detail exemplary embodiments thereof with reference to the attached drawings in which:
Figure 1 is a view to explain the conventional home network environment according to the digital home working group (DHWG);
Figure 2 is a structural diagram of a system sharing digital content through a network according to an exemplary embodiment of the present invention;
Figure 3 is a schematic structural diagram of a source device of Figure 2;
Figure 4 is a schematic structural diagram of a sink device of Figure 2;
Figure 5 is a view of a response message the source device transmits to the sink device according to an exemplary embodiment of the present invention;
Figure 6 is a view of an exemplary content request message the sink device transmits to the source device according to an exemplary embodiment of the present invention;
Figure 7 is a view of another exemplary content request message the sink device transmits to the source device according to an exemplary embodiment of the present invention;
Figure 8 is a view illustrating the operation of a superimposition mode among methods of sharing digital content through a network, according to an exemplary embodiment of the present invention;
Figure 9 is a view illustrating the operation of a redirection mode among the methods of sharing the digital content through the network, according to an exemplary embodiment of the present invention;
Figure 10 is a view illustrating the operation of a new mode among the methods of sharing the digital content through the network, according to an exemplary embodiment of the present invention;
Figure 11 is a view of an exemplary HTTP head information request message;
Figure 12 is a view of an exemplary HTTP head information response message;
Figure 13 is a view of an exemplary HTTP content request message;
Figure 14 is a view of another exemplary HTTP head information response message;
Figure 15 is a view of another exemplary HTTP content request message; and
Figure 16 is a view of yet another exemplary HTTP content request message.

The present invention will now be described more fully with reference to the accompanying drawings, in which exemplary embodiments of the invention are shown.

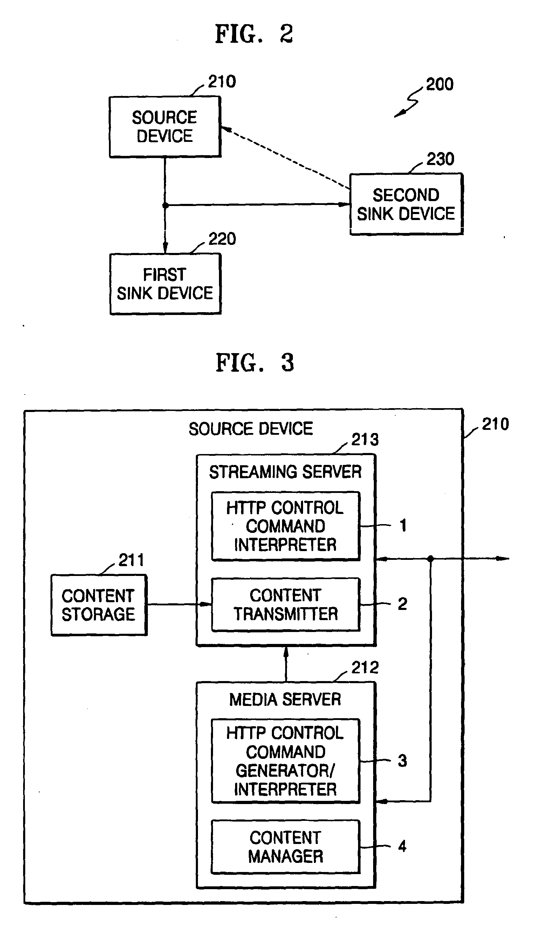

Figure 2 is a structural diagram of a system 200 sharing digital content through a network according to an exemplary embodiment of the present invention. A source device 210 receives an A/V content request from a first or second sink device 220 or 230 and sends A/V content to the first or second sink device 220 or 230 that requested it.

The first sink device 220 gets information on the A/V content from the source device 210, requests the A/V content, and receives and utilizes the A/V content from the source device 210.

The second sink device 230 has the same role as the first sink device 220. For example, the first sink device 220 may be a TV in the living room, and the second sink device 230 may be a PC in another room.

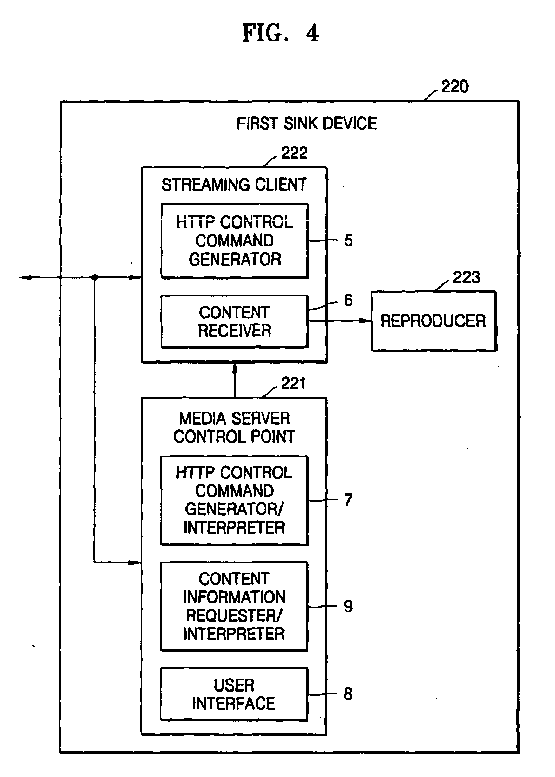

The first sink device 220 requests and receives the A/V content from the source device 210 and utilizes the content. To share the A/V content utilized by the first sink device 220, the second sink device 230 gets information on the A/V content to be shared from the source device 210 and also requests and receives the A/V content. Here, the source device 210 provides information on the sharing state of a device of the requested A/V content, and the first or second sink devices 220 and 230 select a desired sharing mode with reference to the information on the sharing state. This process will be described in more detail with reference to Figures 3 and 4.

Figure 3 is a schematic structural diagram of the source device 210 of Figure 2. The source device 210 is composed of a content storage 211, a media server 212, a streaming server 213. Of course, the content storage 211 may be included in the streaming server 213 or the media server 212.

The content storage 211 stores the A/V content. The media server 212 includes a hyper text transfer protocol (HTTP) control command generator/interpreter 3 and a content manager 4.

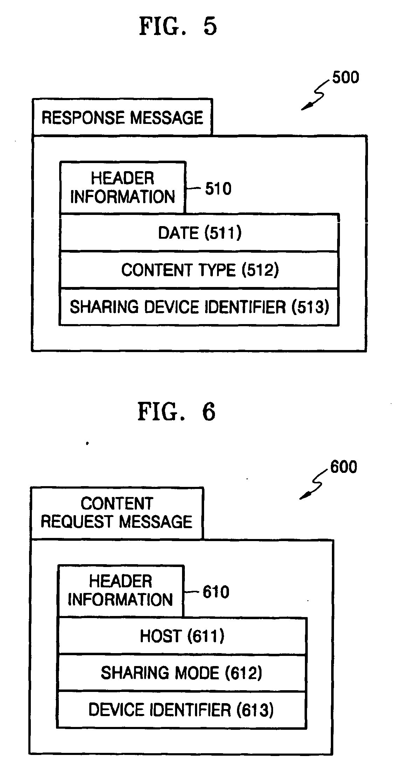

The HTTP control command generator/interpreter 3 generates an HTTP control command according to the present invention and transmits it to the first and second sink devices 220 and 230, interprets an HTTP control command received from the first and second sink devices 220 and 230 and performs an appropriate process. Particularly, according to the present invention, if the HTTP control command generator/interpreter 3 has received an information request message from the first and second sink devices 220 and 230, the information request message is interpreted, and the HTTP control command generator/interpreter 3 generates a response message like the one illustrated in Figure 5 to provide information on the content in response to the request message.

Referring to Figure 5, a response message 500 includes a date 511, content type 512, and a sharing device identifier 513 as header information 510. The date 511 represents the date the response message 500 is sent. The content type 512 is information on the type of the requested content, etc. The sharing device identifier 513 is an identifier that indicates a device which is sharing the requested content with the source device 210 in the present state. In other words, the sharing device indicates a sink device that receives the requested content from the source device. By inserting the sharing device identifier 513 in the response message 500, the first or second sink device 220 or 230 knows to which sink device the source device 210 is currently transmitting the content.

The content manager 4 manages the content stored in the content storage 211, and particularly manages information on the content. That is, if the content manager 4 receives a command requesting the information on the content from a media server control point of the sink device, the content manager 4 searches for the information on the content and transmits the information on the content to the first or second sink device 220 or 230. The HTTP control command generator/interpreter 3 refers to the information on the content the content manager 4 manages when generating response messages such as the response message 500 of Figure 5.

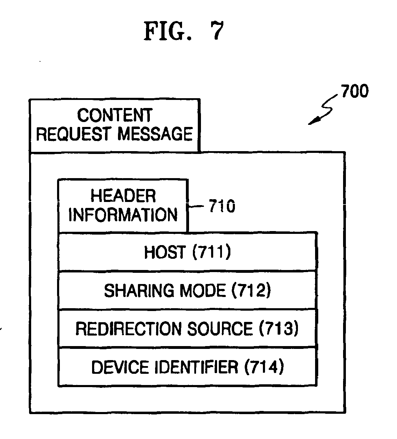

The streaming server 213 includes an HTTP control command interpreter 1 and a content transmitter 2. The HTTP control command interpreter 1 receives the HTTP control command from the first or second sink device 220 or 230 and interprets it. Particularly, according to an exemplary embodiment of the present invention, the HTTP control command interpreter 1 receives content request messages 600 and 700 illustrated in Figures 6 and 7 from the first or second sink device 220 or 230 and interprets them. In addition, the HTTP control command interpreter 1 appropriately controls the content transmitter 2 depending on the results of the interpretation.

The content transmitter 2 gets the A/V content requested by the first or second sink device 220 or 230 from the content storage 211 and transmits it to the first or second sink device 220 or 230.

Figure 4 is a schematic structural diagram of the first sink device 220 of Figure 2. The first sink device 220 includes a media server control point (MSCP) 221, a streaming client 222, and a reproducer 223.

The reproducer 223 consumes the A/V content received from the source device 210.

The MSCP 221 includes an HTTP control command generator/interpreter 7, a user interface 8, and a content information requester/interpreter 9. The user interface 8 receives operation commands (e.g., play) of the A/V contents from a user. The content information requester/interpreter 9 requests content information from the source device using Browse or Search command, receives the content information from the source device, and interprets the content information. When the HTTP control command generator/interpreter 7 has received operation commands of a predetermined content from the user interface 8, it generates a content information request message to obtain information on the content. When the HTTP control command generator/interpreter 7 receives a response message to the content information request message, it interprets the response message. The HTTP control command generator/interpreter 7 transmits such information interpreted from the response message or information on the user's command received via the user interface 8 to the streaming client 222.

The streaming client 222 includes an HTTP control command generator 5 and a content receiver 6. The HTTP control command generator 5 generates an HTTP control command with reference to the information interpreted from the user's command or the content information response message, which are received from the MSCP 221. Such HTTP control commands may be content request messages 600 and 700 illustrated in Figures 6 and 7, which will be explained in more detail below. The content receiver 6 receives the A/V content from the source device 210 and transmits it to the reproducer 223.

Figure 6 is a view of an exemplary content request message which the first or second sink device 220 and 230 transmits to the source device 210 according to an exemplary embodiment of the present invention. Referring to Figure 6, the content request message 600 includes a host 611, a sharing mode 612, and a device identifier 613 as header information 610.

The host 611 indicates address information to distinguish the requested content. The sharing mode 612 indicates the method of sharing the requested content. The exemplary embodiments of the present invention provide three modes: superimposition mode, redirection mode, and new mode.

In the superimposition mode, the source device 210 transmits the A/V content to the first sink device 220, and then begins transmitting the same A/V content to the second sink device 230, in synchronization with the A/V content still transmitted to the first sink device 220. For example, the superimposition mode can be used when two users watch half a movie together through a DVD player in the living room, and then one user continues to watch in the living room while the other watches the rest of the movie on a PC in another room.

In the redirection mode, the source device 210 stops transmitting the A/V content to the first sink device 220, and instead continues transmitting the same A/V content to the second sink device 230. For example, the redirection mode can be used when a user begins watching a movie through the DVD player in the living room, and then watches the rest of the movie through a PC in the other room and wants to stop transmission to the living room.

In the new mode, the source device 210 continues transmitting the A/V content to the first sink device 220, and then independently transmits the A/V content to the second sink device 230 regardless of the A/V content transmitted to the first sink device 220. For example, the new mode can be used when a first user has watched half a movie through the DVD player in the living room, and then a second user wants to watch the same movie from the start through the PC in the other room while the first user continues to watch in the living room.

The device identifier 613 is an identifier for identifying the first and second sink devices 220 and 230, which transmits the content request messages.

Figure 7 is a view of another exemplary content request message the first or second sink device 220 or 230 transmits to the source device 210 according to an exemplary embodiment of the present invention. Referring to Figure 7, the content request message 700 includes a host 711, a sharing mode 712, a redirection source 713, and a device identifier 714 as header information 710. The host 711, the sharing mode 712, and the device identifier 714 are identical to those explained with reference to Figure 6. The content request message 700 further includes the redirection source 713 field compared to the content request message 600.

The redirection source 713 is a field used when it is desired to receive the A/V content in the redirection mode, and indicates the first or second sink device 220 or 230 from which to cut off the previous connection when the A/V content are being shared. Such a field is not needed in the superimposition mode, which does not affect the previous connection. However, in the case of the redirection mode, if there were a plurality of previous connections, a decision needs to be made which previous connection to cut, thereby requiring the redirection source 713 field.

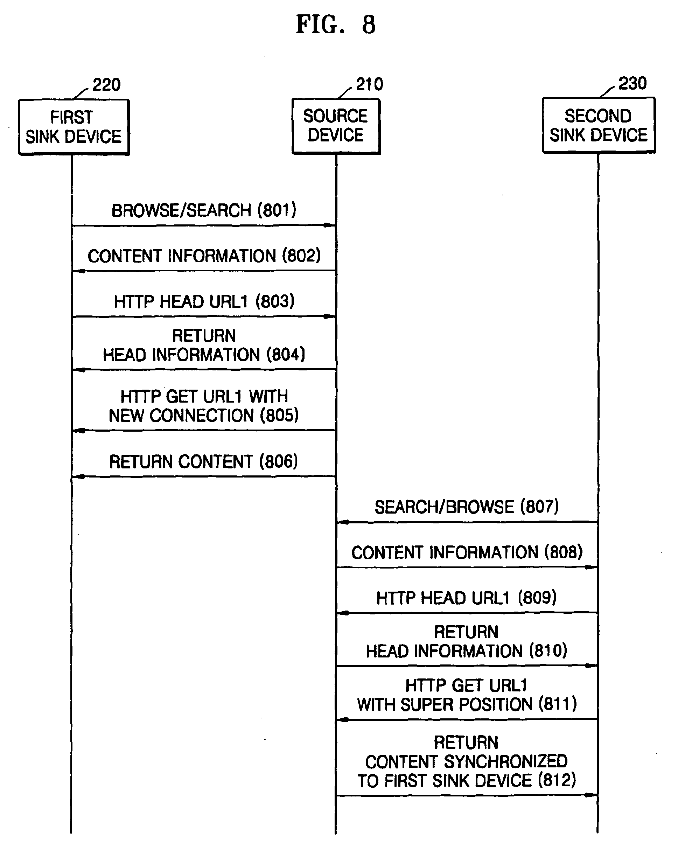

Exemplary methods of sharing the A/V content according to the previously mentioned three sharing modes will be described with reference to Figures 8 through 10. In these examples, it is assumed that a HTTP transmission protocol is used.

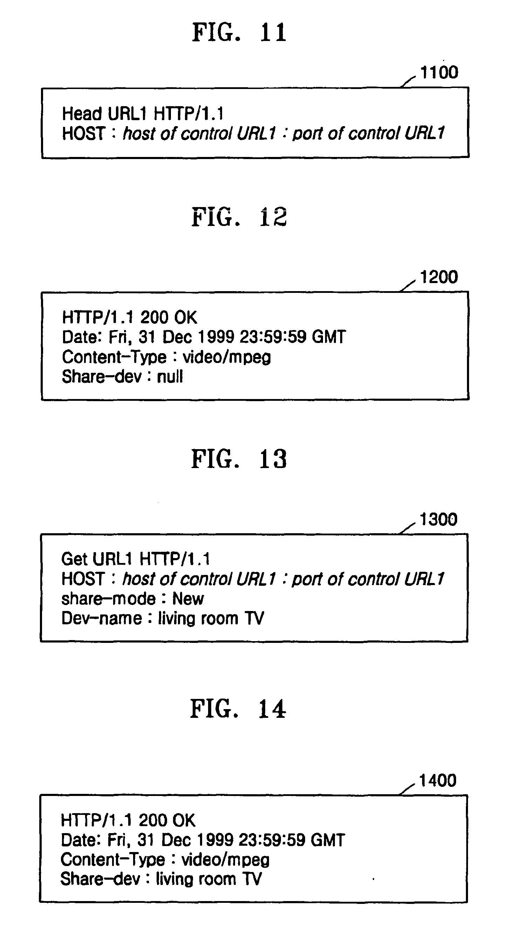

Figure 8 is a view illustrating the operation of the superimposition mode among the methods of sharing digital content through a network, according to an exemplary embodiment of the present invention. The first sink device 220 transmits a command such as browse/search to the source device 210 to obtain the information on the content (Operation 801). The source device 210 that received the command transmits the information on the content it has to the first sink device 220 (Operation 802). The first sink device 220 checks the received information on the content and transmits an HTTP HEAD command, as illustrated in Figure 11, to the source device 210 to obtain header information on the content the first sink device 220 desires to receive (Operation 803).

Figure 11 is a view of an exemplary HTTP head information request message 1100. Among the HTTP request messages, the messages with HEAD as its method denotes a request for information distinguished at a uniform resource identifier (URI), and the requested information is transmitted using the header field in a response message to the HEAD.

Referring to Figure 11, the HTTP head information request message 1100 includes a request for information identified as "URL1," and "HOST" denotes information that identifies an Internet host. In the HOST field, "host of control URL1" and "port of control URL1" is inserted.

The first source device 210 that received the HTTP HEAD command transmits header information on the content corresponding to the URL1 to the first sink device 220 using an HTTP response message like the one illustrated in Figure 12 (Operation 804).

Figure 12 is a view of an exemplary HTTP head information response message 1200. The HTTP response message is composed of a state line, at least one general header, and response header, etc.

Referring to Figure 12, the HTTP head information response message 1200 has "HTTP/1.1 200 OK" as its state line. The "HTTP/1.1" denotes the HTTP version number of the transmitting side, and "200 OK" denotes that the request has been successfully received and the requested information is included in the HTTP head information response message 1200. "DATE" literally denotes the date, "CONTENT-TYPE" literally denotes the type of the content, and "Share-dev" denotes a device that the source device 210 is sharing the current content with another device. Since the current source device 210 does not have a sink device that is receiving the content, "null" is inserted.

Meanwhile, in the present exemplary embodiment and other exemplary embodiments below, requesting header information on the content and receiving it can be explained through Operations 803 and 804 even when the first sink device 220 is requested to receive the content through the new mode. However, Operations 803 and 804 may be omitted when requesting the content in the new mode because the new mode requests the content independently regardless of the content header information received from the source device 210.

The first sink device 220, which received the response message, transmits an HTTP request message, like the one illustrated in Figure 13, to request the content (Operation 805).

Figure 13 is a view of an exemplary HTTP content request message 1300. Among the HTTP request messages, the messages with GET as its method denotes a request for information distinguished at a URI, and the response is returned through an entity body.

Referring to Figure 13, the HTTP head information request message 1300 includes a request for information identified as "URL1," and "HOST" denotes information that identifies an Internet host that provides resources. In the HOST field, "host of control URL1" and "port of control URL1" is inserted.

Particularly, the HTTP head information request message 1300 according to the present invention includes a "share-mode" field and a "Dev-name" mode to identify a device and a sharing mode. The "share-mode" denotes a mode in which the sink device desires to share the content, as described with reference to Figure 6. Because there is no sink device that is sharing the content at present, the first sink device is the first device 220 to use the content. Therefore, "share-mode" is set to "new" mode. To be set to "new" mode means to send the content corresponding to the URL from the beginning. The "Dev-name" is to identify the device which transmits the content request message. If the first sink device 220 is a living room TV, then it is set as "living room TV."

The source device 210 that received the HTTP request message returns the requested content to the first sink device 220 (Operation 806).

While the source device 210 transmits the A/V content to the first sink device 220, the second sink device 230 performs the following operations to receive the A/V content in the superimposition mode.

The second sink device 230 transmits commands such as browse/command to the source device 210 to obtain the information on the content (Operation 807). The source device 210 that received the commands transmits the information on the content it has to the second sink device 230 (Operation 808).

The second sink device 230 checks the received information on the content and transmits an HTTP HEAD command, like the one illustrated in Figure 11, to the source device 210 to obtain header information on the content the second sink device 230 desires to receive (Operation 809).

The sink device 210 that received the HTTP HEAD command transmits the header information on the content corresponding to URL1 to the second sink device 230 using an HTTP response message like the one illustrated in Figure 14 (Operation 810).

Figure 14 is a view of another exemplary HTTP head information response message 1400. Referring to Figure 14, the HTTP head information response message 1400 is similar to the HTTP head information response message 1200 of Figure 12 apart from the content of the field. That is, the source device 210 is already transmitting the A/V content to the first sink device 220. Therefore, "living room TV," denoting the first sink device 220, is inserted in a "share-dev" field, which is to identify the sharing device.

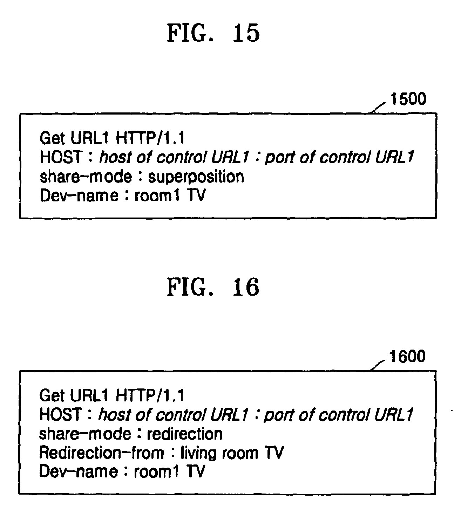

The second sink device 230 that received the HTTP head information response message 1400 transmits an HTTP request message, like the one illustrated in Figure 15, to the source device 210 to request the content (Operation 811).

Figure 15 is a view of another exemplary HTTP content request message 1500. Referring to Figure 15, the HTTP content request message 1500 similar to the HTTP content request message 1300 of Figure 13 apart from the content of the field. That is, "superimposition" is inserted in a "share-mode" field to indicate the desire of the second sink device 230 to receive the A/V content in superimposition with the first sink device 220, and a "room 1 TV" is inserted in a "Dev-name" field to indicate which sink device is transmitting the request message.

The source device 210 that received such HTTP content request message 1500 returns the requested content to the second sink device 230 (Operation 812). That is, the source device 210 transmits identical data synchronized with the first sink device 220 to the second sink device 230, according to the superimposition mode requested by the second sink device 230. If the source device 210 cannot provide the superimposed content, then an error message such as "resource not available" may be transmitted.

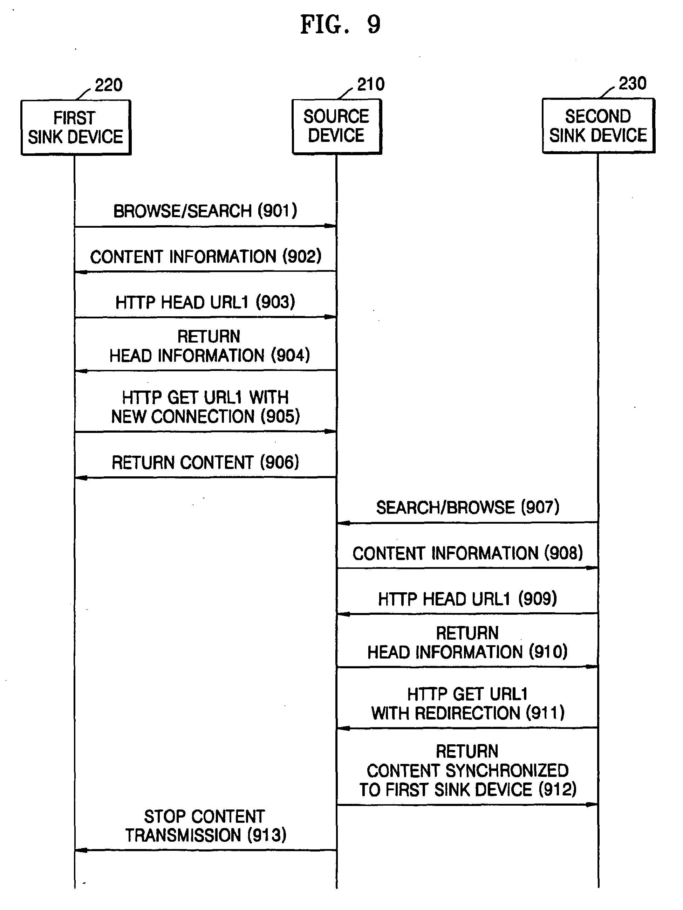

Figure 9 is a view illustrating the operation of the redirection mode among the methods of sharing the digital content through the network, according to an exemplary embodiment of the present invention. The first sink device 220 transmits a command such as browse/search to the source device 210 to obtain the information on the content (Operation 901). The source device 210 that received the command transmits the information on the content it has to the first sink device 220 (Operation 902).

The first sink device 220 checks the received information on the content and transmits an HTTP HEAD command, like the one illustrated in Figure 11, to the source device 210 to obtain header information on one of the content the first sink device 220 desires to receive (Operation 903).

The source device 210 that received the HTTP HEAD command transmits header information on the content corresponding to an URL1 to the first sink device 220 using an HTTP head information response message like the one illustrated in Figure 12 (Operation 904).

The first sink device 220 that received the HTTP head information response message transmits an HTTP request message like the one illustrated in Figure 13, to the source device 210 to request for the content (Operation 905).

The source device 210 that received the HTTP request message returns the requested content to the first sink device 220 (Operation 906).

While the source device 210 transmits the A/V content to the first sink device 220, the second sink device 230 performs the following operations to receive the A/V content in the redirection mode.

The second sink device 230 transmits commands such as browse/command to the source device 210 to the source device 210 to obtain the information on the content (Operation 907). The source device 210 that received the commands transmits the information on the content it has to the second sink device 230 (Operation 908).

The second sink device 230 checks the received information on the content and transmits an HTTP HEAD command, like the one illustrated in Figure 11, to the source device 210 to obtain header information of one of the content the second sink device 230 desires to receive (Operation 909).

The sink device 210 that received the HTTP HEAD command transmits the header information on the content corresponding to URL1 to the second sink device 230 using an HTTP head information response message like the one illustrated in Figure 14 (Operation 910).

The second sink device 230 that received the HTTP response message transmits an HTTP content request message like the one illustrated in Figure 16 to request the content (Operation 911).

Figure 16 is a view of yet another exemplary HTTP content request message 1600. Referring to Figure 16, the HTTP content request message 1600 is similar to the HTTP content request message 1500 of Figure 15 except for that the HTTP content request message 1600 indicates the redirection mode, not the superimposition mode, as the sharing mode. That is, "redirection" is inserted in the "share-mode" field to indicate that the second sink device 230 desires to continue receiving the A/V content the first sink device 220 was receiving, and stop the A/V content transmission to the first sink device 220. A "room 1 TV" is inserted in the "Dev-name" to identify the sink device which transmits the request message. The "Redirection-from" field indicates the redirection source, as described with reference to Figure 7, and determines which connection is to be cut among the previous plurality of connections that were receiving the A/V content. In the HTTP content request message 1600, "living room TV" is inserted in the "Redirection-from" field to cut the connection to the first sink device 220.

The source device 210 that received the HTTP content request message 1600 returns the requested content to the second sink device 230 (Operation 912). That is, the source device 210 transmits identical data synchronized with the first sink device 220 to the second sink device 230, according to the redirection mode requested by the second sink device 230, and the source device 210 then stops the transmission of the A/V content to the first sink device 220, as is written in the redirection source field. The source device 210 may transmit an error message to the second sink device 230 if the redirection cannot be performed.

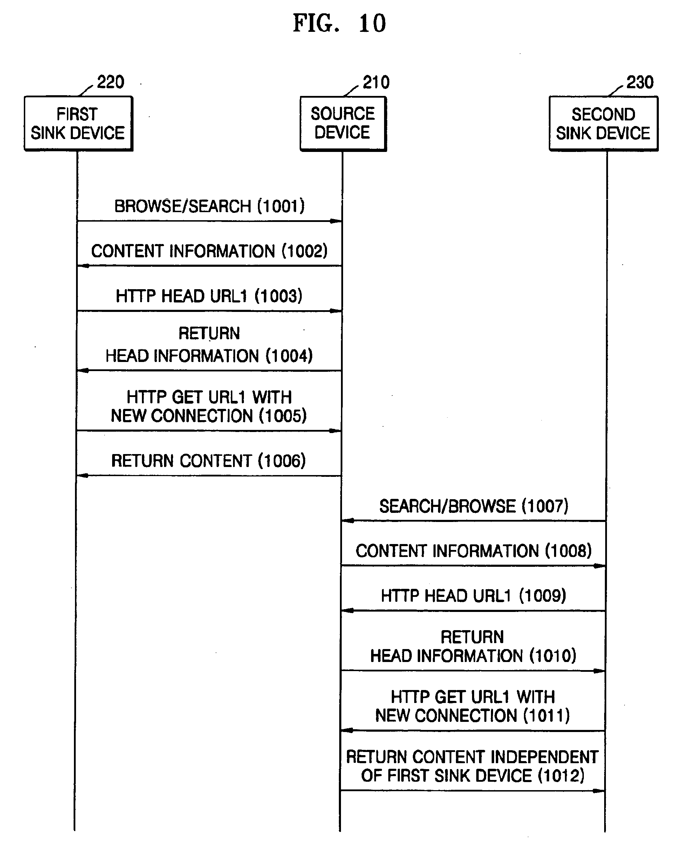

Figure 10 is a view illustrating the operation of the new mode among the methods of sharing the digital content through the network, according to an exemplary embodiment of the present invention. The first sink device 220 transmits a command such as browse/search to the source device 210 to obtain the information on the content (Operation 1001). The source device 210 that received the command transmits the information on the content it has to the first sink device 220 (Operation 1002).

The first sink device 220 checks the received information on the content and transmits an HTTP HEAD command, like the one illustrated in Figure 11, to the source device 210 to obtain header information on one of the content the first sink device 220 desires to receive (Operation 1003).

The source device 210 that received the HTTP HEAD command transmits header information on the content corresponding to an URL1 to the first sink device 220 using an HTTP head information response message like the one illustrated in Figure 12 (Operation 1004).

The first sink device 220 that received the HTTP head information response message transmits an HTTP content request message like the one illustrated in Figure 13, to the source device 210 to request for the content (Operation 1005).

The source device 210 that received the HTTP content request message returns the requested content to the first sink device 220 (Operation 1006).

While the source device 210 transmits the A/V content to the first sink device 220, the second sink device 230 performs the following operations to receive the A/V content in the new mode.

The second sink device 230 transmits commands such as browse/command to the source device 210 to the source device 210 to obtain the information on the content (Operation 1007). The source device 210 that received the commands transmits the information on the content it has to the second sink device 230 (Operation 1008).

The second sink device 230 checks the received information on the content and transmits an HTTP HEAD command, like the one illustrated in Figure 11, to the source device 210 to obtain header information on the content the second sink device 230 desires to receive (Operation 1009).

The sink device 210 that received the HTTP HEAD command transmits the header information on the content corresponding to URL1 to the second sink device 230 using an HTTP head information response message like the one illustrated in Figure 14 (Operation 1010).

The second sink device 230 that received the HTTP head information response message transmits an HTTP content request message, like the one illustrated in Figure 16, to independently request the content (Operation 1011).

The second sink device 230 designates the sharing mode of the HTTP content request message, like the one illustrated in Figure 13, as "New" and transmits it to the source device 210, even when the source device 210 is already transmitting the A/V content to the first sink device 220 and is in the sharing mode. Therefore, the second sink device 230 can independently receive the A/V content from the beginning, regardless of the A/V content being transmitted to the first sink device 220 by the source device 210.

The source device 210 that received such HTTP content request message returns the requested content to the second sink device 230 (Operation 1012). That is, the source device 210 independently transmits data to the second sink device 230 regardless of data being transmitted to the first sink device 220 according to the "new" mode requested by the second sink device 230. The source device 210 can transmit an error message to the second sink device 230 if the redirection cannot be performed.

The processing methods of the source device 210 and the first and second sink devices 220 and 230 may also be configured as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion. Also, functional programs, codes, and code segments for configuring the processing methods can be easily construed by programmers skilled in the art to which the present invention pertains.

According to above-mentioned configuration of the exemplary embodiments of the present invention, content may be shared by a plurality of devices in a network. Particularly, numerous scenarios may be provided by providing a content sharing configuration in a receiving device having a user interface. Especially, the present invention provides a function of sharing the content in a 2-box model, i.e., digital media server (DMS) and a digital media player (DMP), of the digital home working group (DHWG).

Although a few preferred embodiments have been shown and described, it will be appreciated by those skilled in the art that various changes and modifications might be made without departing from the scope of the invention, as defined in the appended claims.

## Claims

1. A method of sharing audio/video (A/V) content through a network (200), the method **characterised by**:
receiving information regarding a sharing state of the A/V content from a source device (210) which provides the A/V content, wherein the sharing state includes a sharing device identifier which identifies a first sink device (220) which shares the A/V content;
transmitting a request for the A/V content to the source device (210), wherein the request designates a sharing mode relating to the A/V content based on the received sharing state information, wherein the sharing mode indicates a sharing type of the A/V content; and
receiving the A/V content from the source device (210) in response to the request.

2. The method of claim 1, wherein the request for the A/V content is generated by a second sink device (230) that desires to share the A/V content.

3. The method of claim 1, wherein the sharing mode comprises a new mode that requests the A/V content to be transmitted to the second sink device (230) independently, regardless of the A/V content being transmitted to the first sink device (220).

4. The method of claim 1, wherein the sharing mode comprises a superimposition mode that requests the A/V content, which is transmitted to the first sink device (220), be transmitted in superimposition to the second sink device (230).

5. The method of claim 1, wherein the sharing mode comprises a redirection mode that requests the A/V content being transmitted to the first sink device (220) be transmitted to the second sink device (230) in succession and stops the transmission to the first sink device (220).

6. A method of sharing audio/video (A/V) content through a network (200), the method **characterised by**:
providing information regarding a sharing state of the A/V content, wherein the sharing state includes a sharing device identifier which identifies a first sink device (220) which is currently sharing the A/V content;
receiving a request from a second sink device (230) to transmit the A/V content being transmitted to the first sink device (220) to the second sink device (230), wherein the request indicates a sharing type of the A/V content with the first sink device (220); and
transmitting the A/V content being transmitted to the first sink device (220) to the second sink device (230) in response to the request.

7. The method of claim 6, wherein the sharing mode comprises a new mode that requests the A/V content to be transmitted to the second sink device (230) independently, regardless of the A/V content being transmitted to the first sink device (220).

8. The method of claim 6, wherein the sharing mode comprises a superimposition mode that requests the A/V content, which is transmitted to the first sink device (220), be transmitted in superimposition to the second sink device (230).

9. The method of claim 6, wherein the sharing mode comprises a redirection mode that requests the A/V content being transmitted to the first sink device (220) be transmitted in succession to the second sink device (230) and stops the transmission to the first sink device (220).

10. The method of claim 9, further comprising stopping the transmission of the A/V content to the first sink device (220).

11. A sink device (230) for sharing audio/video (A/V) content in a network (200), the sink device (230) **characterised in that**:
a first processor (221) is arranged to request information regarding the A/V content from a source device (210), which provides the A/V content, and to receive information on another sink device (220), which is sharing the A/V content, in response to the request; and
a second processor (222) is arranged to generate and transmit, to the source device (210), a request message to transmit the A/V content, and to receive the A/V content from the source device (210) in response to the request, wherein the second processor (222) designates a sharing mode which indicates the sharing type of the A/V content with the another sink device (220), in the request message.

12. The sink device (220) of claim 11, wherein the sharing mode comprises a new mode that requests the A/V content to be transmitted to the sink device (230) independently, regardless of the A/V content being transmitted to the another sink device (220).

13. The sink device (220) of claim 11, wherein the sharing mode comprises a superimposition mode that requests the A/V content, which is transmitted to the another sink device (220), be transmitted in superimposition.

14. The sink device (220) of claim 11, wherein the sharing mode comprises a redirection mode that requests the A/V content being transmitted to the another sink device (220) be transmitted in succession to the sink device (230) and stops the transmission to the another sink device (220).

15. The sink device (220) of claim 11, wherein the first processor (221) is configured as a media server control point, and the second processor (222) is configured as a streaming client.

16. A source device (210) for sharing audio/video (A/V) content in a network (200), the source device (210) **characterised in that**:
a first processor (212) transmits information on a sharing state of the A/V content to a second sink device (230) in response to a request of the second sink device (230), which requests a transmission of information regarding the A/V content being transmitted to a first sink device (220), wherein the sharing state includes a sharing device identifier which identifies the first sink device (220); and
a second processor (213) transmits the A/V content, which is transmitted to the first sink device (220), to the second sink device (230) in response to the request of the second sink device (230), wherein the second processor (213) receives a request which designates a sharing mode which indicates the sharing type of the A/V content with the first sink device (220).

17. The source device (210) of claim 16, wherein the sharing mode comprises a new mode that requests the A/V content to be transmitted to the second sink device (230) independently, regardless of the A/V content being transmitted to the first sink device (220).

18. The source device (210) of claim 16, wherein the sharing mode comprises a superimposition mode that requests the A/V content, which is transmitted to the first sink device (220), be transmitted in superimposition to the second sink device (230).

19. The source device (210) of claim 16, wherein the sharing mode comprises a redirection mode that requests the A/V content being transmitted to the first sink device (220) be transmitted in succession to the second sink device (230) and stops the transmission to the first sink device (220).

20. The source device (210) of claim 19, further comprising stopping the transmission of the A/V content to the first sink device (220).

21. The source device (210) of claim 16, wherein the first processor (212) is configured as a media server control point, and the second processor (213) is configured as a streaming client.

22. A structure of a response message of a source device (210) for responding to an audio/video (A/V) content information request transmitted to a source device (210) from a sink device (230), the A/V content information request being a request to share the A/V content via a network (200), **characterised in that** the structure of the response message comprises:
a sharing type field (512) of the requested A/V content; and
a sharing device identifier field (513) indicating a sharing device, as a first sink device, which shares the A/V content with the source device (210).

23. The structure of the response message of claim 22, wherein the response message uses an hyper text transfer protocol (HTTP) response message.

24. A structure of a response message (600) for an audio/video (A/V) content information request (700) transmitted to a source device (210) from a sink device (230), the A/V content information request (700) being a request to share the A/V content via a network (200), **characterised in that** the structure of the response message (600) comprises:
an information field (611) for identifying A/V content ;
a sharing mode field (612) that shows a sharing type of the A/V content with another sink device (220); and
a device identifying field (613) to identify the sink device (230) transmitting the request message.

25. The structure of the response message (600) of claim 24, wherein the response message (600) uses an hyper text transfer protocol (HTTP) response message.

26. The structure of the response message (600) of claim 24, wherein a sharing mode comprises a new mode that requests the A/V content to be transmitted to the sink device (230) independently, regardless of the A/V content being transmitted to the another sink device (220).

27. The structure of the response message (600) of claim 24, wherein the sharing mode includes a superimposition mode that requests the A/V content , which is transmitted to the another sink device (220), be transmitted in superimposition to the sink device (230).

28. The structure of the response message (600) of claim 24, wherein the sharing mode includes a redirection mode that requests the A/V content being transmitted to the another sink device (220) be transmitted in succession to the sink device (230) and stops the transmission to the another sink device (220).

## Patentansprüche

1. Verfahren zum gemeinsamen Nutzen von Audio-/Video-Inhalt (A/V-Inhalt) durch ein Netz (200), wobei das Verfahren **gekennzeichnet ist durch**:
Empfangen von Informationen, die einen Zustand der gemeinsamen Nutzung des A/V-Inhalts von einer Quellenvorrichtung (210), die den A/V-Inhalt bereitstellt, betreffen, wobei der Zustand der gemeinsamen Nutzung eine Kennung der Vorrichtung zur gemeinsamen Nutzung enthält, die eine erste Senkenvorrichtung (220), die den A/V-Inhalt gemeinsam nutzt, identifiziert;
Senden einer Anforderung für den A/V-Inhalt zu der Quellenvorrichtung (210), wobei die Anforderung einen Modus der gemeinsamen Nutzung angibt, der sich auf den A/V-Inhalt basierend auf den empfangenen Informationen über den Zustand der gemeinsamen Nutzung bezieht, wobei der Modus der gemeinsamen Nutzung einen Typ der gemeinsamen Nutzung des A/V-Inhalts angibt; und
Empfangen des A/V-Inhalts von der Quellenvorrichtung (210) in Reaktion auf die Anforderung.

2. Verfahren nach Anspruch 1, wobei die Anforderung für den A/V-Inhalt durch eine zweite Senkenvorrichtung (230), die den A/V-Inhalt gemeinsam nutzen möchte, erzeugt wird.

3. Verfahren nach Anspruch 1, wobei der Modus der gemeinsamen Nutzung einen neuen Modus umfasst, der anfordert, dass der A/V-Inhalt unabhängig zu der zweiten Senkenvorrichtung (230) gesendet wird, ungeachtet dessen, dass der A/V-Inhalt zu der ersten Senkenvorrichtung (220) gesendet wird.

4. Verfahren nach Anspruch 1, wobei der Modus der gemeinsamen Nutzung einen Überlagerungsmodus umfasst, der anfordert, dass der A/V-Inhalt, der zu der ersten Senkenvorrichtung (220) gesendet wird, in Überlagerung zu der zweiten Senkenvorrichtung (230) gesendet wird.

5. Verfahren nach Anspruch 1, wobei der Modus der gemeinsamen Nutzung einen Umleitungsmodus umfasst, der anfordert, dass der A/V-Inhalt, der zu der ersten Senkenvorrichtung (220) gesendet wird, nacheinander zu der zweiten Senkenvorrichtung (230) gesendet wird, und das Senden zu der ersten Senkenvorrichtung (220) anhält.

6. Verfahren zum gemeinsamen Nutzen von Audio-/Video-Inhalt (A/V-Inhalt) durch ein Netz (200), wobei das Verfahren **gekennzeichnet ist durch**:
Bereitstellen von Informationen, die den Zustand der gemeinsamen Nutzung des A/V-Inhalts betreffen, wobei der Zustand der gemeinsamen Nutzung eine Kennung der Vorrichtung zur gemeinsamen Nutzung enthält, die eine erste Senkenvorrichtung (220) identifiziert, die derzeit den A/V-Inhalt gemeinsam nutzt;
Empfangen einer Anforderung von einer zweiten Senkenvorrichtung (230), den A/V-Inhalt, der zu der ersten Senkenvorrichtung (220) gesendet wird, zu der zweiten Senkenvorrichtung (230) zu senden, wobei die Anforderung einen Typ der gemeinsamen Nutzung des A/V-Inhalts mit der ersten Senkenvorrichtung (220) angibt; und
Senden des A/V-Inhalts, der zu der ersten Senkenvorrichtung (220) gesendet wird, zu der zweiten Senkenvorrichtung (230) in Reaktion auf die Anforderung.

7. Verfahren nach Anspruch 6, wobei der Modus der gemeinsamen Nutzung einen neuen Modus umfasst, der anfordert, dass der A/V-Inhalt unabhängig zu der zweiten Senkenvorrichtung (230) gesendet wird, ungeachtet dessen, dass der A/V-Inhalt zu der ersten Senkenvorrichtung (220) gesendet wird.

8. Verfahren nach Anspruch 6, wobei der Modus der gemeinsamen Nutzung einen Überlagerungsmodus umfasst, der anfordert, dass der A/V-Inhalt, der zu der ersten Senkenvorrichtung (220) gesendet wird, in Überlagerung zu der zweiten Senkenvorrichtung (230) gesendet wird.

9. Verfahren nach Anspruch 6, wobei der Modus der gemeinsamen Nutzung einen Umleitungsmodus umfasst, der anfordert, dass der A/V-Inhalt, der zu der ersten Senkenvorrichtung (220) gesendet wird, nacheinander zu der zweiten Senkenvorrichtung (230) gesendet wird, und das Senden zu der ersten Senkenvorrichtung (220) anhält.

10. Verfahren nach Anspruch 9, das ferner das Anhalten des Sendens des A/V-Inhalts zu der ersten Senkenvorrichtung (220) umfasst.

11. Senkenvorrichtung (230) zum gemeinsamen Nutzen von Audio-/Video-Inhalt (A/V-Inhalt) in einem Netz (200), wobei die Senkenvorrichtung (230) **dadurch gekennzeichnet ist, dass**
ein erster Prozessor (221) ausgelegt ist, Informationen, die den A/V-Inhalt betreffen, von einer Quellenvorrichtung (210), die den A/V-Inhalt bereitstellt, anzufordern und Informationen über eine weitere Senkenvorrichtung (220), die den A/V-Inhalt gemeinsam nutzt, in Reaktion auf die Anforderung zu empfangen; und
ein zweiter Prozessor (222) ausgelegt ist, eine Nachricht zur Anforderung, A/V-Inhalt zu senden, zu erzeugen und zu der Quellenvorrichtung (210) zu senden und den A/V-Inhalt von der Quellenvorrichtung (210) in Reaktion auf die Anforderung zu empfangen,
wobei der zweite Prozessor (222) einen Modus der gemeinsamen Nutzung benennt, der den Typ der gemeinsamen Nutzung des A/V-Inhalts mit der weiteren Senkenvorrichtung (220) in der Anforderungsnachricht angibt.

12. Senkenvorrichtung (220) nach Anspruch 11, wobei der Modus der gemeinsamen Nutzung einen neuen Modus umfasst, der anfordert, dass der A/V-Inhalt unabhängig zu der zweiten Senkenvorrichtung (230) gesendet wird, ungeachtet dessen, dass der A/V-Inhalt zu der weiteren Senkenvorrichtung (220) gesendet wird.

13. Senkenvorrichtung (220) nach Anspruch 11, wobei der Modus der gemeinsamen Nutzung einen Überlagerungsmodus umfasst, der anfordert, dass der A/V-Inhalt, der zu der weiteren Senkenvorrichtung (220) gesendet wird, in Überlagerung gesendet wird.

14. Senkenvorrichtung nach Anspruch 11, wobei der Modus der gemeinsamen Nutzung einen Umleitungsmodus umfasst, der anfordert, dass der A/V-Inhalt, der zu der weiteren Senkenvorrichtung (220) gesendet wird, nacheinander zu der Senkenvorrichtung (230) gesendet wird, und das Senden zu der weiteren Senkenvorrichtung (220) anhält.

15. Senkenvorrichtung (220) nach Anspruch 11, wobei der erste Prozessor (221) als ein Medienserver-Steuerpunkt konfiguriert ist und der zweite Prozessor (222) als ein Streaming-Client konfiguriert ist.

16. Quellenvorrichtung (210) zum gemeinsamen Nutzen von Audio-/Video-Inhalt (A/V-Inhalt) in einem Netz (200), wobei die Quellenvorrichtung (210) **dadurch gekennzeichnet ist, dass**
ein erster Prozessor (212) Informationen über einen Zustand der gemeinsamen Nutzung des A/V-Inhalts zu einer zweiten Senkenvorrichtung (230) sendet in Reaktion auf eine Anforderung der zweiten Senkenvorrichtung (230), die ein Senden von Informationen anfordert, die sich auf den A/V-Inhalt beziehen, der zu einer ersten Senkenvorrichtung (220) gesendet wird, wobei der Zustand der gemeinsamen Nutzung eine Kennung einer Vorrichtung zur gemeinsamen Nutzung enthält, die die erste Senkenvorrichtung (220) identifiziert; und
ein zweiter Prozessor (213) den A/V-Inhalt, der zu der ersten Senkenvorrichtung (220) gesendet wird, zu der zweiten Senkenvorrichtung (230) sendet in Reaktion auf die Anforderung der zweiten Senkenvorrichtung (230), wobei der zweite Prozessor (213) eine Anforderung empfängt, die einen Modus der gemeinsamen Nutzung benennt, der den Typ der gemeinsamen Nutzung des A/V-Inhalts mit der ersten Senkenvorrichtung (220) angibt.

17. Quellenvorrichtung (210) nach Anspruch 16, wobei der Modus der gemeinsamen Nutzung einen neuen Modus umfasst, der anfordert, dass der A/V-Inhalt unabhängig zu der zweiten Senkenvorrichtung (230) gesendet wird, ungeachtet dessen, dass der A/V-Inhalt zu der ersten Senkenvorrichtung (220) gesendet wird.

18. Quellenvorrichtung (210) nach Anspruch 16, wobei der Modus der gemeinsamen Nutzung einen Überlagerungsmodus umfasst, der anfordert, dass der A/V-Inhalt, der zu der ersten Senkenvorrichtung (220) gesendet wird, in Überlagerung zu der zweiten Senkenvorrichtung (230) gesendet wird.

19. Quellenvorrichtung (210) nach Anspruch 16, wobei der Modus der gemeinsamen Nutzung einen Umleitungsmodus umfasst, der anfordert, dass der A/V-Inhalt, der zu der ersten Senkenvorrichtung (220) gesendet wird, nacheinander zu der zweiten Senkenvorrichtung (230) gesendet wird, und das Senden zu der ersten Senkenvorrichtung (220) anhält.

20. Quellenvorrichtung (210) nach Anspruch 19, die ferner das Anhalten des Sendens des A/V-Inhalts zu der ersten Senkenvorrichtung (220) umfasst.

21. Quellenvorrichtung (210) nach Anspruch 16, wobei der erste Prozessor (212) als ein Medienserver-Steuerpunkt konfiguriert ist und der zweite Prozessor (213) als ein Streaming-Client konfiguriert ist.

22. Struktur einer Antwortnachricht einer Quellenvorrichtung (210) zum Antworten auf eine Anforderung von Audio-/Video-Inhaltsinformationen (A/V-Inhaltsinformationen), die von einer Senkenvorrichtung (230) zu einer Quellenvorrichtung (210) gesendet wird, wobei die Anforderung der A/V-Inhaltsinformationen eine Anforderung ist, den A/V-Inhalt über ein Netz (200) gemeinsam zu nutzen, **dadurch gekennzeichnet, dass** die Struktur der Antwortnachricht Folgendes umfasst:
ein Feld (512) des Typs der gemeinsamen Nutzung des angeforderten A/V-Inhalts; und
ein Feld (513) der Kennung der Vorrichtung zur gemeinsamen Nutzung, das eine Vorrichtung zur gemeinsamen Nutzung als eine erste Senkenvorrichtung, die den A/V-Inhalt mit der Quellenvorrichtung (210) gemeinsam nutzt, angibt.

23. Struktur der Antwortnachricht nach Anspruch 22, wobei die Antwortnachricht eine Hypertext-Transferprotokoll-Antwortnachricht (HTTP-Antwortnachricht) verwendet.

24. Struktur einer Antwortnachricht (600) für eine Anforderung (700) von Audio-/Video-Inhaltsinformationen (A/V-Inhaltsinformationen), die zu einer Quellenvorrichtung (210) von einer Senkenvorrichtung (230) gesendet wird, wobei die Anforderung der A/V-Inhaltsinformationen eine Anforderung ist, den A/V-Inhalt über ein Netz (200) gemeinsam zu nutzen, **dadurch gekennzeichnet, dass** die Struktur der Antwortnachricht (600) Folgendes umfasst:
ein Informationsfeld (611) zum Identifizieren von A/V-Inhalt;
ein Feld (612) für den Modus der gemeinsamen Nutzung, das einen Typ der gemeinsamen Nutzung des A/V-Inhalts mit einer weiteren Senkenvorrichtung (220) zeigt; und
ein Feld (613) zur Identifikation der Vorrichtung, um die Senkenvorrichtung (230) zu identifizieren, die die Anforderungsnachricht sendet.

25. Struktur der Antwortnachricht (600) nach Anspruch 24, wobei die Antwortnachricht (600) eine Hypertext-Transferprotokoll-Antwortnachricht (HTTP-Antwortnachricht) verwendet.

26. Struktur der Antwortnachricht (600) nach Anspruch 24, wobei der Modus der gemeinsamen Nutzung einen neuen Modus umfasst, der anfordert, dass der A/V-Inhalt unabhängig zu der zweiten Senkenvorrichtung (230) gesendet wird, ungeachtet dessen, dass der A/V-Inhalt zu der weiteren Senkenvorrichtung (220) gesendet wird.

27. Struktur der Antwortnachricht (600) nach Anspruch 24, wobei der Modus der gemeinsamen Nutzung einen Überlagerungsmodus enthält, der anfordert, dass der A/V-Inhalt, der zu der weiteren Senkenvorrichtung (220) gesendet wird, in Überlagerung zu der Senkenvorrichtung (230) gesendet wird.

28. Struktur der Antwortnachricht (600) nach Anspruch 24, wobei der Modus der gemeinsamen Nutzung einen Umleitungsmodus enthält, der anfordert, dass der A/V-Inhalt, der zu der weiteren Senkenvorrichtung (220) gesendet wird, nacheinander zu der Senkenvorrichtung (230) gesendet wird, und das Senden zu der weiteren Senkenvorrichtung (220) anhält.

## Revendications

1. Procédé de partage de contenu audio/vidéo (A/V) par l'intermédiaire d'un réseau (200), le procédé étant **caractérisé par** :
la réception d'informations concernant un état partagé du contenu A/V en provenance d'un dispositif source (210) qui fournit le contenu A/V, l'état de partage comprenant un identifiant de dispositif de partage qui identifie un premier dispositif récepteur (220) qui partage le contenu A/V ;
la transmission d'une demande du contenu A/V au dispositif source (210), la demande désignant un mode de partage associé au contenu A/V sur la base des informations d'état de partage reçues, le mode de partage indiquant un type de partage du contenu A/V ; et
la réception du contenu A/V en provenance du dispositif source (210) en réponse à la demande.

2. Procédé selon la revendication 1, dans lequel la demande du contenu A/V est générée par un deuxième dispositif récepteur (230) qui souhaite partager le contenu A/V.

3. Procédé selon la revendication 1, dans lequel le mode de partage comprend un nouveau mode qui demande que le contenu A/V soit transmis indépendamment au deuxième dispositif récepteur (230), que le contenu A/V soit ou non transmis au premier dispositif récepteur (220).

4. Procédé selon la revendication 1, dans lequel le mode de partage comprend un mode de superposition qui demande que le contenu A/V, qui est transmis au premier dispositif récepteur (220), soit transmis en superposition au deuxième dispositif récepteur (230).

5. Procédé selon la revendication 1, dans lequel le mode de partage comprend un mode de redirection qui demande que le contenu A/V transmis au premier dispositif récepteur (220) soit transmis successivement au deuxième dispositif récepteur (230) et interrompt la transmission au premier dispositif récepteur (220).

6. Procédé de partage de contenu audio/vidéo (A/V) par l'intermédiaire d'un réseau (200), le procédé étant **caractérisé par** :
la fourniture d'informations concernant un état de partage du contenu A/V, l'état de partage comprenant un identifiant de dispositif de partage qui identifie un premier dispositif récepteur (220) qui partage à l'instant courant le contenu A/V ;
la réception d'une demande en provenance d'un deuxième dispositif récepteur (230) demandant de transmettre le contenu A/V transmis au premier dispositif récepteur (220) au deuxième dispositif récepteur (230), la demande indiquant un type de partage du contenu A/V avec le premier dispositif récepteur (220) ; et
la transmission du contenu A/V transmis au premier dispositif récepteur (220) au deuxième dispositif récepteur (230) en réponse à la demande.

7. Procédé selon la revendication 6, dans lequel le mode de partage comprend un nouveau mode qui demande que le contenu A/V soit transmis indépendamment au deuxième dispositif récepteur (230), que le contenu A/V soit ou non transmis au premier dispositif récepteur (220).

8. Procédé selon la revendication 6, dans lequel le mode de partage comprend un mode de superposition qui demande que le contenu A/V, qui est transmis au premier dispositif récepteur (220), soit transmis en superposition au deuxième dispositif récepteur (230).

9. Procédé selon la revendication 6, dans lequel le mode de partage comprend un mode de redirection qui demande que le contenu A/V transmis au premier dispositif récepteur (220) soit successivement transmis au deuxième dispositif récepteur (230) et interrompt la transmission au premier dispositif récepteur (220).

10. Procédé selon la revendication 9, comprenant en outre l'arrêt de la transmission du contenu A/V au premier dispositif récepteur (220).

11. Dispositif récepteur (230) destiné à partager un contenu audio/vidéo (A/V) dans un réseau (200), le dispositif récepteur (230) étant **caractérisé en ce que** :
un premier processeur (221) est conçu pour demander des informations concernant un état partagé du contenu A/V à un dispositif source (210), qui fournit le contenu A/V, et pour recevoir des informations concernant un autre dispositif récepteur (220), qui partage le contenu A/V, en réponse à la demande ; et
un deuxième processeur (222) est conçu pour générer et transmettre au dispositif source (210) un message de demande demandant de transmettre le contenu A/V, et pour recevoir le contenu A/V en provenance du dispositif source (210) en réponse à la demande, le deuxième processeur (222) désignant un mode de partage qui indique le type de partage du contenu A/V avec l'autre dispositif récepteur (220), dans le message de demande.

12. Dispositif récepteur (220) selon la revendication 11, dans lequel le mode de partage comprend un nouveau mode qui demande que le contenu A/V soit transmis indépendamment au dispositif récepteur (230), que le contenu A/V soit ou non transmis à l'autre dispositif récepteur (220).

13. Dispositif récepteur (220) selon la revendication 11, dans lequel le mode de partage comprend un mode de superposition qui demande que le contenu A/V, qui est transmis à l'autre dispositif récepteur (220), soit transmis en superposition.

14. Dispositif récepteur (220) selon la revendication 11, dans lequel le mode de partage comprend un mode de redirection qui demande que le contenu A/V transmis à l'autre dispositif récepteur (220) soit transmis successivement au dispositif récepteur (230) et interrompt la transmission à l'autre dispositif récepteur (220).

15. Dispositif récepteur (220) selon la revendication 11, dans lequel le premier processeur (221) est configuré en tant que point de commande de serveur multimédia, et le deuxième processeur (222) est configuré en tant que client de diffusion multimédia.

16. Dispositif source (210) destiné à partager un contenu audio/vidéo (A/V) dans un réseau (200), le dispositif source (210) étant **caractérisé en ce que** :
un premier processeur (212) transmet des informations concernant un état de partage du contenu A/V à un deuxième dispositif récepteur (230) en réponse à une demande du deuxième dispositif récepteur (230), qui demande une transmission d'informations concernant le contenu A/V transmis à un premier dispositif récepteur (220), l'état de partage comprenant un identifiant de dispositif de partage qui identifie le premier dispositif récepteur (220) ;
un deuxième processeur (213) transmet le contenu A/V, qui est transmis au premier dispositif récepteur (220), au deuxième dispositif récepteur (230) en réponse à la demande du dispositif récepteur (230), le deuxième processeur (213) recevant une demande qui désigne un mode de partage indiquant le type de partage du contenu A/V avec le premier dispositif récepteur (220).

17. Dispositif source (210) selon la revendication 16, dans lequel le mode de partage comprend un nouveau mode qui demande que le contenu A/V soit transmis indépendamment au deuxième dispositif récepteur (230), que le contenu A/V soit ou non transmis au premier dispositif récepteur (220).

18. Dispositif source (210) selon la revendication 16, dans lequel le mode de partage comprend un mode de superposition qui demande que le contenu A/V, qui est transmis au premier dispositif récepteur (220), soit transmis en superposition au deuxième dispositif récepteur (230).

19. Dispositif source (210) selon la revendication 16, dans lequel le mode de partage comprend un mode de redirection qui demande que le contenu A/V transmis au premier dispositif récepteur (220) soit transmis successivement au deuxième dispositif récepteur (230) et interrompt la transmission au premier dispositif récepteur (220).

20. Dispositif source (210) selon la revendication 19, comprenant en outre l'arrêt de la transmission du contenu A/V au premier dispositif récepteur (220).

21. Dispositif source (210) selon la revendication 16, dans lequel le premier processeur (212) est configuré en tant que point de commande de serveur multimédia, et le deuxième processeur (213) est configuré en tant que client de diffusion multimédia.

22. Structure d'un message de réponse d'un dispositif source (210) destiné à répondre à une demande d'informations de contenu audio/vidéo (A/V) transmise à un dispositif source (210) par un dispositif récepteur (230), la demande d'informations de contenu A/V étant une demande de partage du contenu A/V par l'intermédiaire d'un réseau (200), **caractérisée en ce que** la structure du message de réponse comprend :
un champ de type de partage (512) du contenu A/V demandé ; et
un champ d'identifiant de dispositif de partage (513) indiquant un dispositif de partage, en tant que premier dispositif récepteur, qui partage le contenu A/V avec le dispositif source (210).

23. Structure du message de réponse selon la revendication 22, dan laquelle le message de réponse utilise un message de réponse à protocole de transfert hypertexte (HTTP).

24. Structure du message de réponse (600) destinée à une demande d'informations de contenu audio/vidéo (A/V) (700) transmise à un dispositif source (210) par un dispositif récepteur (230), la demande d'informations de contenu A/V (700) étant une demande demandant de partager le contenu A/V par l'intermédiaire d'un réseau (200), **caractérisée en ce que** la structure du message de réponse (600) comprend :
un champ d'informations (611) pour identifier un contenu A/V ;
un champ de mode de partage (612) qui indique un type de partage du contenu A/V avec un autre dispositif récepteur (220) ; et
un champ d'identification de dispositif (613) pour identifier le dispositif récepteur (230) transmettant le message de demande.

25. Structure du message de réponse (600) selon la revendication 24, dans laquelle le message de réponse (600) utilise un message de réponse à protocole de transfert hypertexte (HTTP).

26. Structure du message de réponse (600) selon la revendication 24, dans laquelle un mode de partage comprend un nouveau mode qui demande que le contenu A/V soit transmis indépendamment au dispositif récepteur (230), que le contenu A/V soit ou non transmis à l'autre dispositif récepteur (220).

27. Structure du message de réponse (600) selon la revendication 24, dans laquelle le mode de partage comprend un mode de superposition qui demande que le contenu A/V, qui est transmis à l'autre dispositif récepteur (220), soit transmis en superposition au dispositif récepteur (230).

28. Structure du message de réponse (600) selon la revendication 24, dans laquelle le mode de partage comprend un mode de redirection qui demande que le contenu A/V transmis à l'autre dispositif récepteur (220) soit transmis successivement au dispositif récepteur (230) et interrompt la transmission à l'autre dispositif récepteur (220).
